# EUROPEAN PATENT APPLICATION

(11) **EP 2 306 306 A2**
(43) Date of publication of application: **06.04.2011**
(21) Application number: 10164896.2
(22) Date of filing: 03.06.2010
(51) Int. Cl.: G06F 9/44

(54) **Method for providing widget and apparatus for providing and displaying the same**

(30) Priority: 11.09.2009 KR 20090085957
(71) Applicant: SAMSUNG ELECTRONICS CO., LTD., Suwon-si Gyeonggi-do 442-742 (KR)
(72) Inventor: Kim, Yong-deok, Gyeonggi-do (KR); Lee, Hye-jeong, Seoul (KR); Choi, Sung-wook, Gyeonggi-do (KR); Kim, Yeun-bae, Gyeonggi-do (KR)
(74) Representative: Fearnside, Andrew Simon

(57) **Abstract**

A widget providing method and an apparatus for displaying the widget are provided. According to a method of e.g. generating a hyperlink widget, a widget is generated (S230) upon selection of links included in a web page. The generated widget is displayed on the specific portion of a screen (S250). Through the generated widget, a user may check brief information regarding the hyperlinked web page, select widgets including contents that the user wants, and load and display the hyperlinked web pages corresponding to the selected widgets (S270), without the user having to return to the apparatus page and select another hyperlink.

## Description

### CROSS-REFERENCE TO RELATED APPLICATIONS

This application claims priority from Korean Patent Application No. 2009-85957, filed in the Korean Intellectual Property Office on September 11, 2009, the disclosure of which is incorporated herein by reference.

### BACKGROUND

### 1. Field of the Exemplary Embodiments

Aspects of the exemplary embodiments relate to a widget providing method and a display apparatus, and more particularly, though not exclusively to a widget providing method in which, if a hyperlink is selected, a widget to search the hyperlinked web page is generated and displayed in a predetermined portion of a display, and a display apparatus.

### 2. Description of the Related Art

A hyperlink connects an element within a hypertext document such as a word, a phrase, a symbol, or an image to another element in another hypertext document. A user initiates or activates a hyperlink by clicking on an underlined text or text marked in a different color (a linked element) within a hypertext document. The user may search a web page, a document, and a video clip more conveniently and easily using the hyperlink.

When the user searches a web page through an Internet browser, the user selects a hyperlink included in a web page, loads a linked page, and checks the page. If the user wishes to search contents led by another hyperlink, the user should go back to the previous page and select another hyperlink to view the contents.

Recently, the concept of tap browsing has been introduced to a personal computer (PC) browser to facilitate the above process. The tap browsing allows a user to check information by loading hyperlinks that the user wants to check additionally in a separate tap page and moving the tap.

However, the user cannot search a web page hyperlinked to a current page using the above method. In addition, the user should close and open a web page again, or move to a new tab to check information.

Moreover, since the entire web page is loaded, it requires a lot of internal resources when web contents are stored. Particularly, in an apparatus with limited memory capacity and Central Processing Unit (CPU) such as a TV or a mobile device, it is difficult to load a plurality of pages simultaneously and change the screen.

In a TV or a mobile device, a user begins to search information in a first web page. When the user selects a hyperlink included in the first web page, the user may load the page and check the information. However, in order to check another web page, the user should go back to the previous page, select another hyperlink, and load another page once again. If the user searches a web page in an apparatus with limited memory capacity or CPU such as a TV or a mobile device, the user would go through the loading process several times.

A user wishes to search information on the Internet more easily and conveniently. Accordingly, a method that allows the user to search information on the Internet while consuming a minimum level of internal resources without changing the screen frequently, is required.

### SUMMARY OF THE EXEMPLARY EMBODIMENTS

Preferred embodiments relate to a widget providing method in which, if a hyperlink is selected, a widget corresponding to the hyperlink is generated and displayed on a screen, and a display apparatus. According to the present invention there is provided an apparatus and method as set forth in the appended claims. Other features of the invention will be apparent from the dependent claims, and the description which follows.

A method for providing a widget, according to an exemplary embodiment, comprises selecting at least one link, generating a widget corresponding to the selected link, and displaying the generated widget on a screen.

The method may further comprise displaying, if the generated widget is selected by a user, a linked web page corresponding to the selected widget.

The selecting may receive selection of a plurality of links simultaneously according to a user manipulation, and the generating may generate a plurality of widgets corresponding to the selected plurality of links.

The method may further comprise storing the generate widget.

The storing may store a widget selected by a user from among the generated widgets.

The generated widget may display at least one of part of contents, image, and brief information of a web page corresponding to the link.

If the generated widget is updated, contents and shape of updated widget may also be changed.

The displaying may display the generated widget separately from a web page display area.

The screen may include a webpage display area and a widget display area, and the displaying may display the generated widget on the widget display area.

A display apparatus, according to an exemplary embodiment, comprises a display unit to display an input image and a control unit to select at least one link, generate a widget corresponding to the selected link, and control the display unit to display the generated widget on a screen.

If the generated widget is selected by a user, the control unit may control the display unit to display a linked web page corresponding to the widget.

The control unit may select a plurality of links simultaneously according to a user manipulation, generate a plurality of widgets corresponding to the selected plurality of links, and control the display unit to display the generated plurality of widgets on a screen.

The display apparatus may further comprise a storage unit to store the generated widget.

The control unit may control the storage unit so that a widget selected by a user from among the generated widgets is stored in the storage unit.

The control unit may control the display unit to display at least one of part of contents, image, and brief information of a web page corresponding to the link on the generated widget.

If the generated widget is updated, the control unit may control the display unit so that contents and shape of the updated widget are also changed.

The control unit may control the display unit to display the generated widget on a screen separately from a web page display area.

The screen may include a web page display area and a widget display area, and the control unit may control the display unit to display the generated widget on the widget display area.

### BRIEF DESCRIPTION OF THE DRAWINGS

The above and/or other aspects of the exemplary embodiments will be more apparent by describing certain exemplary embodiments with reference to the accompanying drawings, in which:

FIG. 1 is a detailed block diagram of a display apparatus, according to an exemplary embodiment;

FIG. 2 is a view provided to explain the process of generating a widget by selecting the hyperlinked area of a web page, and if the generated widget is selected, displaying a web page corresponding to the selected widget, according to an exemplary embodiment;

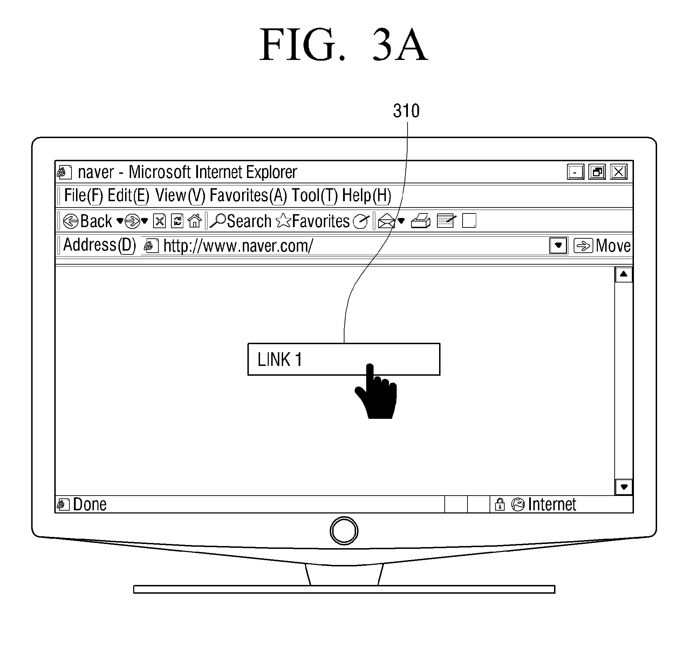

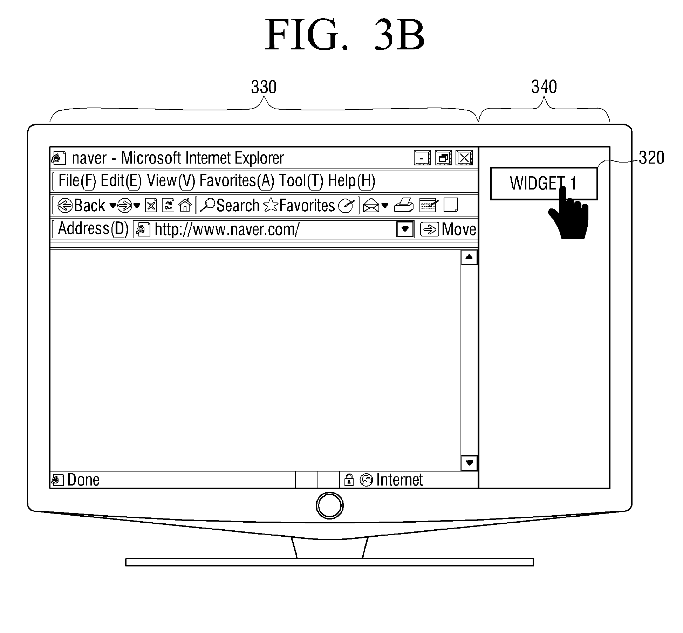

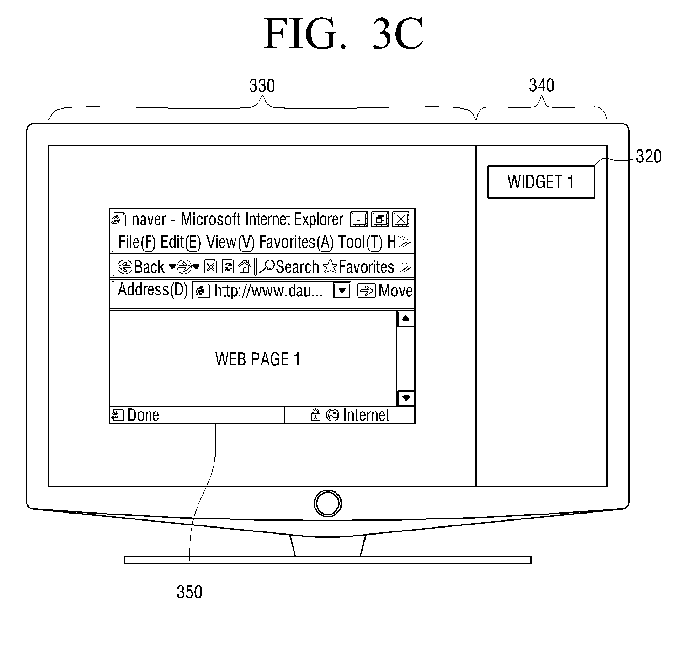

FIG. FIG. 3A, FIG. 3B and FIG. 3C are views illustrating the process of generating a widget by selecting the hyperlinked area of a web page, and if the generated widget is selected, displaying a web page corresponding to the selected widget in detail, according to an exemplary embodiment;

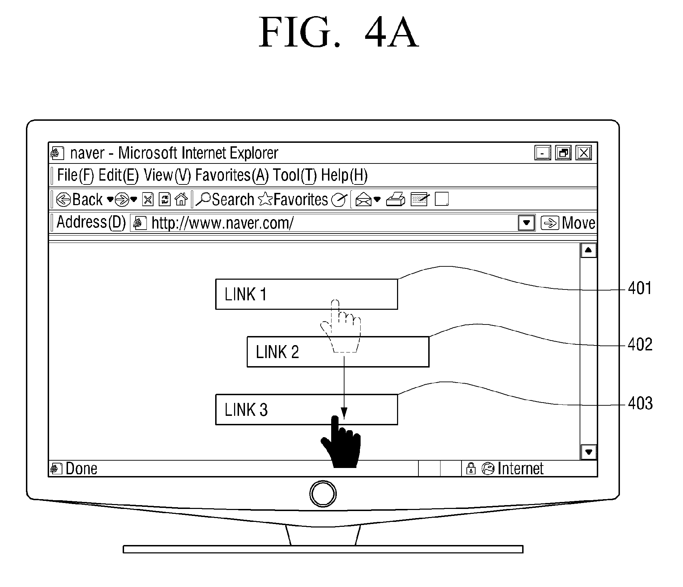

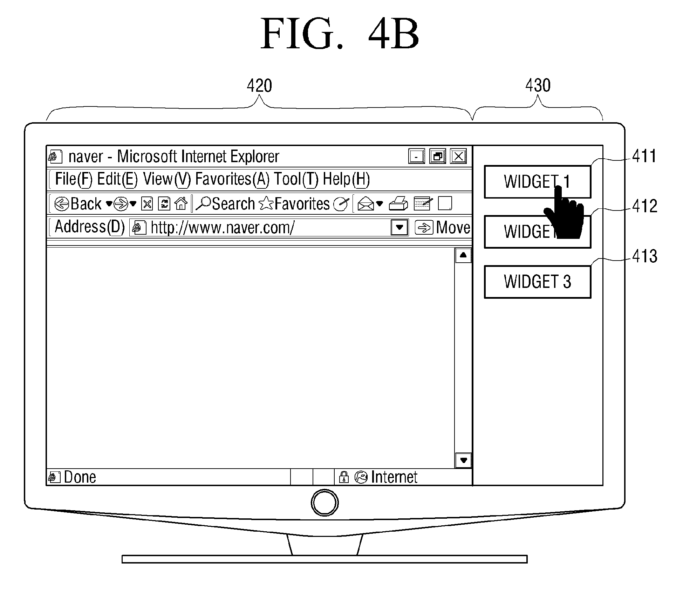

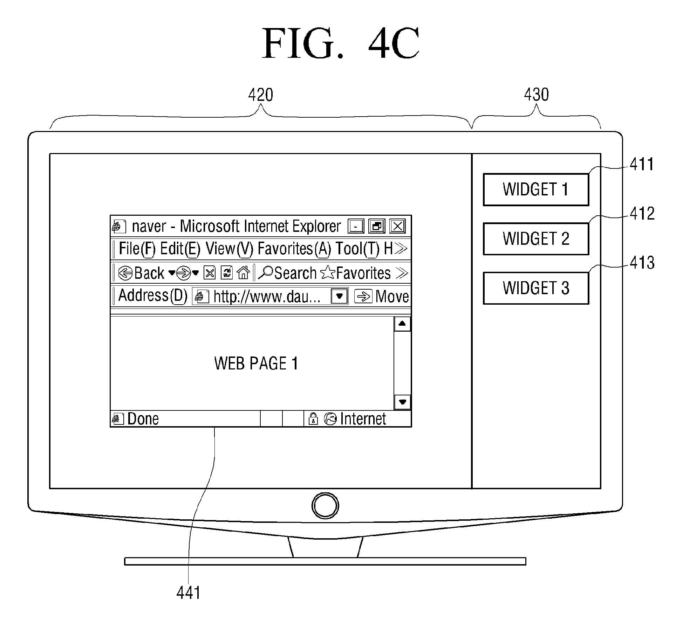

FIG. 4A, FIG. 4B and FIG. 4C are views illustrating the processing of generating a plurality of widgets simultaneously by selecting a plurality of hyperlinked areas of a web page, and if at least one widget from among the generated widgets is selected, displaying a web page corresponding to the selected widget in detail, according to an exemplary embodiment.

### DETAILED DESCRIPTION OF THE EXEMPLARY EMBODIMENTS

Reference will now be made in detail to the exemplary embodiments, examples of which are illustrated in the accompanying drawings, wherein like reference numerals refer to like elements throughout. The embodiments are described below, in order to explain the present invention by referring to the figures.

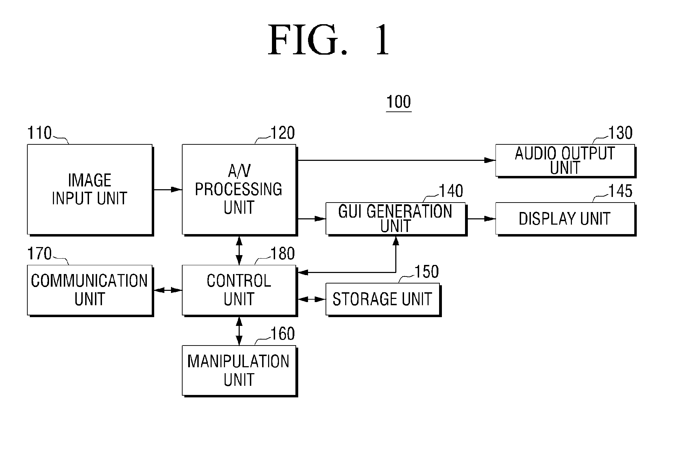

FIG. 1 is a block diagram of a display apparatus 100, according to an exemplary embodiment of the present invention;

As illustrated in FIG. 1, the display apparatus 100 comprises an image input unit 110, an A/V processing unit 120, an audio output unit 130, a graphic user interface (GUI) generation unit 140, a display unit 145, a storage unit 150, a manipulation unit 160, a communication unit 170, and a control unit 180.

The image input unit 110 comprises a plurality of input terminals, and receives various signals (not shown) including a component image signal, a super-video home system (S-VHS) image signal, and a composite image signal provided from an external apparatus (not shown) such as a video player and a DVD player through these input terminals and receives a sound signal corresponding to each image signal.

The A/V processing unit 120 performs signal-processing such as video decoding, video scaling, and audio decoding on an image signal and an audio signal input from the image input unit 110 and the control unit 180. The A/V processing unit 120 outputs an image signal to the GUI generation unit 140 and outputs an audio signal to the audio output unit 130.

If the received image and audio signal are stored in the storage unit 150, the A/V processing unit 120 stores the image and audio in the storage unit 150 in a compressed form.

The audio output unit 130 outputs audio output from the A/V processing unit 120 to a speaker (not shown) or an audio output terminal connected to an external speaker (not shown).

The GUI generation unit 140 generates a GUI for a user. The GUI generation unit 140 generates a GUI of a user menu which is provided in an on screen display (OSD) form.

The display unit 145 displays an image output from the A/V processing unit 120.

In addition, the display unit 145 may display a web page loaded through the communication unit 170. Specifically, the display unit 145 displays the web page loaded through the communication unit 170 on a web page area. The display unit 145 also displays a widget which has been generated by selecting a hyperlink in a web page on a widget area. Herein, the web page area refers to an area where a widget is displayed on a screen.

The display unit 145 may display a web page area and a widget area separately not only after a widget is generated but also before the widget is generated.

The widget area may be displayed on any portion of a screen. For instance, the widget area may be one of upper, lower, left, or right portion of the screen.

The generated widget may be arranged horizontally or vertically in the widget area. If the number of widget increases and thus it is difficult to display all of the generated widgets in one screen, the display unit 145 may display the widgets using a scroll bar.

The storage unit 150 may store resources of a web page loaded through the communication unit 170. In addition, the storage unit 150 may store an image signal transmitted from the image input unit 110. The storage unit 150 may be realized as a hard disk or a non-volatile memory, but may also be realized in other forms.

The manipulation unit 160 receives a user command and transmits it to the control unit 180. In particular, the manipulation unit 160 receives a command to select a hyperlink or a widget and transmits the command to the control unit 180. The manipulation unit 160 includes a pointing device employing relative mapping such as a remote controller, a mouse, a key pad, and a touch pad, and a direct pointing device employing direct mapping, and a key board.

The communication unit 170 may be configured as a communication module such as a LAN card and a modem. In addition, the communication unit 170 receives/transmits data by connecting to an external communication network (not shown). The communication unit 170 also transmits a web page, a video, or an image received from the Internet to the control unit 180.

The control unit 180 selects at least one hyperlink according to a user manipulation and generates a widget corresponding to the selected hyperlink. Under the control of the control unit 180, the generated widget is stored in the storage unit 150 and if a widget is selected, a web page corresponding to the widget is displayed.

In addition, if a plurality of hyperlinks are selected at one time by a user manipulation, the control unit generates a plurality of widgets corresponding to the selected plurality of hyperlinks.

Under the control of the control unit 180, the generated plurality of widgets are stored in the storage unit 150, and if at least one of the plurality of widgets is selected, a web page corresponding to the widget is displayed on display unit 145.

If at least one hyperlink from among a plurality of hyperlinks is selected by a user manipulation, the control unit 180 may change the highlight or color of the selected hyperlink so as to distinguish the selected hyperlink from non-selected hyperlinks.

The control unit 180 may control the GUI generation unit 140 to generate a widget by moving at least one of the selected hyperlink to a widget area. There are a plurality of methods for generating a widget by moving a hyperlink to a widget area. 1) If the manipulation unit 160 is a touch screen and a user drags a plurality of hyperlinks to a widget area while touching them by a finger, the control unit 180 may generate a widget corresponding to the dragged hyperlinks simultaneously. 2) If the manipulation unit 160 is a mouse and a user drags a plurality of hyperlinks to a widget area while clicking on a mouse button, the control unit 180 may generate a widget corresponding to the dragged hyperlinks simultaneously.

The control unit 180 controls the display unit 145 to display at least one part of the contents, image, and brief information of a hyperlinked web page corresponding to the generated widget on a screen.

If the generated widget is updated, the control unit 180 changes not only the contents of the widget but also the form of the widget at the same time. For instance, if a widget is updated, the control unit 180 may change the size or the color of the widget, or may vibrate the widget.

The control unit 180 controls the display unit 145 to display a generated widget in a widget area. Specifically, in order for a user to check the contents of a hyperlinked web page without changing a screen, the control unit 180 controls the display unit 145 to display the generated widget in a widget area which is separate from a web page area. The control unit 180 may adjust or minimize the size of the widget area.

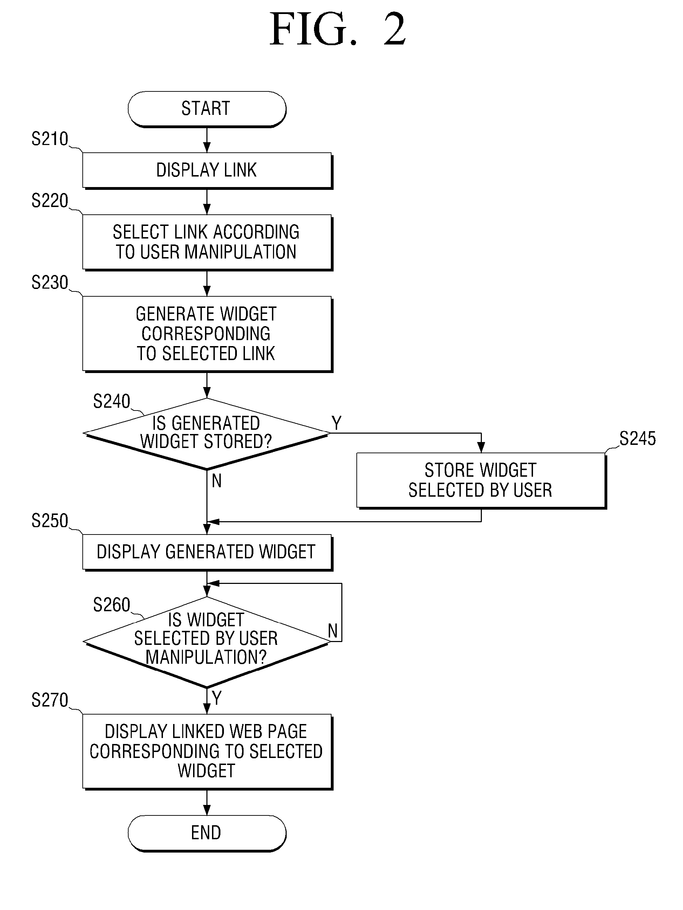

A method of generating a widget and displaying a web page corresponding to the widget will be explained in detail with reference to FIG. 2.

Referring to FIG. 2, the display apparatus 100 displays a hyperlink of an Internet web page on a screen (S210). As described above, a hyperlink may be displayed in an underlined text or as a text in a different color within a hypertext, but these are only examples, and a hyperlink may be displayed in other ways.

The display apparatus 100 selects a hyperlink according to a user command. The display apparatus 100 may select a single hyperlink or may select a plurality of hyperlinks simultaneously, according to a user command.

For instance, if the manipulation unit 160 is a touch screen and a user drags a plurality of hyperlinks while touching them with a finger, the display apparatus 100 may select the plurality of hyperlinks at the same time. If the manipulation unit 160 is a mouse and the user drags a plurality of hyperlinks while clicking on the mouse button, the display apparatus 100 may select the plurality of hyperlinks at the same time. Detailed description regarding this will be provided with reference to FIG. 4A, FIG. 4B and FIG. 4C.

If at least one hyperlink from among a plurality of hyperlinks is selected according to a user manipulation, the display apparatus 100 may change the highlight or color of the selected hyperlink so as to distinguish the selected hyperlink from non-selected hyperlinks.

If at least one hyperlink is selected as described above, the display apparatus 100 generates a widget corresponding to the selected link (S230).

The display apparatus 100 may generate a widget by moving the selected hyperlink to a widget area. There are a plurality of methods for generating a widget by moving a hyperlink to a widget area. 1) If the manipulation unit 160 is a touch screen and a user drags a plurality of hyperlinks to a widget area while touching them by a finger, the control unit 180 may generate a widget corresponding to the plurality of hyperlinks simultaneously. 2) If the manipulation unit 160 is a mouse and a user drags a plurality of hyperlinks to a widget area while clicking on a mouse button, the control unit 180 may generate a widget corresponding to the plurality of hyperlinks simultaneously.

The generated widget may include at least one part of the contents, image, and brief information of a hyperlinked web page. The part of contents of a web page refers to the contents located in a certain pixel of the web page. The image of a web page refers to an image included in the web page. The brief information of a web page refers to information such as the title of the web page, the Internet Protocol (IP) address, and generation time.

The display apparatus 100 confirms whether to store a generated widget in the storage unit 150 (S240). If a user decides to store the generated widget (S240-Y), the display apparatus 100 stores the widget selected by the user in the storage unit 150 (S245). The generated widget may be stored temporarily, or may be stored permanently,_as favorites. If the widget is stored as favorites, the display apparatus 100 may provide a function regarding favorites. In addition, the display apparatus 100 may store all of the generated widgets without confirming whether or not to store them.

As described above, after confirming whether or not a generated widget is stored, the display apparatus 100 displays the generated widget on a screen (S250). The generated widget is displayed in a widget area of the screen. As described above, the widget area is one of upper, lower, left, or right portion of the screen.

The generated widget area may be displayed separately from a web page area. Accordingly, a user may check a part of the contents, image or brief information of a hyperlinked web page through the widget, without changing the screen.

If a widget is updated on a real-time basis, the display apparatus 100 may change the updated widget. Specifically, if a generated widget is updated in real-time by the information transmitted from the communication unit 170, not only the contents of the updated widget, but also the form of the widget may change simultaneously. For example, the display apparatus 100 may change the size or the color of the widget, or may vibrate the widget. Accordingly, a user may check whether the generated widget is updated easily.

If the number of widgets increases and thus it is difficult to display all of the generated widgets on one screen, the display apparatus 100 may display the generated widgets using a scroll bar.

If the generated widget is displayed, the display apparatus 100 determines whether the generated widget is selected by a user (S260).

If the generated widget is selected (S260-Y), the display apparatus 100 displays a hyperlinked web page corresponding to the selected widget on a screen (S270). In this case, the hyperlinked web page corresponding to the selected widget is displayed on a web page area 330, which is separate from a widget area 340.

As such, the display apparatus 100 provides a widget corresponding to a hyperlink, and thus, a user may search a web page through the widget easily and conveniently without checking all of the hyperlinked web pages.

The method of generating a widget by selecting a hyperlinked area, and displaying a web page corresponding to the selected widget once the generated widget is selected, will be explained in detail with reference to FIG. 3A, FIG. 3B and FIG. 3C.

FIG. 3A illustrates that the display apparatus 100 selects a hyperlink according to a user manipulation before a widget is generated on the display unit 145. Specifically, before the widget is generated, a web page is displayed (1) on the entire display unit, or (2) separately from the widget area 340 as illustrated in FIG. 3b. If a linked area 310 in the web page is selected according to a user manipulation, the display apparatus 100 generates a widget corresponding to the linked area 310.

FIG. 3B illustrates a screen on which a generated widget 1 (320) is displayed. Specifically, if the widget 1 (320) is generated, the generated widget is displayed on the widget area 340 which is separate from the web page area 330. The size of the widget area 340 may be adjusted, for example, according to a user manipulation by reducing the size of the widget to be placed on a task bar. The display apparatus 100 selects the widget 1 (320) according to a user manipulation.

FIG. 3C illustrates a screen on which a hyperlinked web page corresponding to the selected widget 1 (320) that is displayed if the generated widget 1 (320) is selected. Specifically, if a user selects the widget 1 (320), the display apparatus 100 loads a web page 1 (350) corresponding to the widget 1 transmitted through the communication unit 170. The display apparatus 100 displays the transmitted web page 1 (350) on the web page area 330 of the screen.

Accordingly, the user may search the hyperlinked web page of a web page without changing the screen.

If a plurality of hyperlinked areas are selected, a plurality of widgets are generated simultaneously as illustrated in FIG. 4A, FIG. 4B and FIG. 4C. If at least one widget from among the generated widgets is selected, a web page corresponding to the selected widget is displayed. The process will be explained in detail.

FIG. 4A illustrates a screen in which the display apparatus 100 selects a plurality of hyperlinks according to a user manipulation. Specifically, a web page could be displayed (1) on the entire display unit (not shown), or (2) separately from the widget area 430 as illustrated in FIG. 4b. If a plurality of hyperlinked areas 401, 402, 403 of the web page are selected simultaneously according to a user manipulation, the display apparatus generates a plurality of widgets corresponding to the hyperlinks.

The method of selecting the plurality of hyperlinked areas 401, 402, 403 have been described above. For instance, if the manipulation unit is a touch screen and a user drags the plurality of hyperlinked areas while touching them using a finger, the control unit may select the plurality of hyperlinks simultaneously. If the manipulation unit is a mouse and a user drags the plurality of hyperlinked areas while clicking on a mouse button, the control unit may select the plurality of hyperlinks simultaneously.

FIG. 4b displays a screen on which a plurality of generated widgets 411, 412, 413 are displayed. Specifically, if the plurality of widgets 411, 412, 413 are generated, the display apparatus 100 displays the plurality of widgets on the widget area 430 which is separate from the web page area 420. The size of the widget area 430 may be adjusted, for instance, by minimization according to a user manipulation. The display apparatus 100 may select at least one of the widget 1 (411), the widget 2 (412), and the widget 3 (413).

FIG. 4c illustrates a screen on which a hyperlinked web page corresponding to the selected widget is displayed if the one of the plurality of generated widgets is selected. As illustrated in FIG. 4c, if a user selects the first widget 1 (411), the display apparatus 100 loads a hyperlinked web page 1 (441) corresponding to the widget 1 (411) transmitted through the communication unit 170. The display apparatus 100 displays the transmitted web page 1 (441) on the web page area 420 of the screen.

In the same fashion, the display apparatus 100 displays a web page 2 (not shown) corresponding to the selected widget 2 if the widget 2 (412) is selected, and displays a web page 3 (not shown) corresponding to the selected widget 3 (not shown) if the widget 3 (413) is selected according to a user manipulation.

The hyperlink in the exemplary embodiment of the present invention is only an example, and the hyperlink could be replaced with other kinds of links.

In addition, the web page in the exemplary embodiments is only an example, and the web page could be replaced with other kinds of pages which can be linked (for example, a document in a word file).

In the exemplary embodiment, the display apparatus 100 could be any kinds of display apparatus 100 which can search an Internet web page. For instance, the display apparatus 100 could be a TV, a portable media player (PMP), an MP3, or a mobile phone.

According to various exemplary embodiments, if the hyperlink of a web page is selected, a display apparatus generates and displays a widget corresponding to the hyperlink. A user may search the contents of the linked web page on the Internet through the brief information displayed in the generated widget. Accordingly, the user may search desired information conveniently and easily without loading the entire web page.

In addition, the display apparatus does not load the entire web page when a widget is generated but displays part of contents of the web page, image, or brief information. Accordingly, the display apparatus may minimize internal resources when storing contents.

Although a few embodiments have been shown and described, it would be appreciated by those skilled in the art that changes may be made without departing from the principles of the invention, the scope of which is defined in the claims and their equivalents.

## Claims

1. A method for providing a widget, comprising;
selecting at least one link (S220);
generating a widget (S230) corresponding to the selected link; and displaying the generated widget on a screen (S250).

2. The method according to claim 1, further comprising:
displaying, if the generated widget is selected by a user, a linked web page corresponding to the selected widget (S270).

3. The method according to claim 1 or claim 2, wherein the selecting receives selection of a plurality of links simultaneously according to a user manipulation, and the generating generates a plurality of widgets corresponding to the selected plurality of links.

4. The method according to one of claim 1 to claim 3, further comprising:
storing the generate widget (S245).

5. The method according to claim 4, wherein the storing stores a widget selected by a user from among the generated widgets.

6. The method according to one of claim 1 to claim 5, wherein the generated widget displays at least one part of the contents, image, and brief information of a web page corresponding to the link.

7. The method according to one of claim 1 to claim 6, wherein, if the generated widget is updated, contents and shape of updated widget are also changed.

8. The method according to one of claim 1 to claim 7, wherein the displaying displays the generated widget separately from a web page display area.

9. The method according to one of claim 1 to claim 8, wherein the screen includes a webpage display area and a widget display area, and
wherein the displaying displays the generated widget on the widget display area.

10. A display apparatus, comprising:
a display unit (145) arranged to display an input image; and
a control unit (180) arranged to select at least one link, to generate a widget corresponding to the selected link, and to control the display unit to display the generated widget on a screen.

11. The display apparatus according to claim 10, wherein the control unit, if the generated widget is selected by a user, is arranged to control the display unit to display a linked web page corresponding to the widget.

12. The display apparatus according to claim 10 or claim 11, wherein the control unit is arranged to select a plurality of links simultaneously according to a user manipulation, to generate a plurality of widgets corresponding to the selected plurality of links, and to control the display unit to display the generated plurality of widgets on a screen.

13. The display apparatus according to one of claim 10 to claim 12, further comprising:
a storage unit (150) to store the generated widget,
wherein the control unit is arranged to control the storage unit so that a widget selected by a user from among the generated widgets is stored in the storage unit.

14. The display apparatus according to one of claim 10 to claim 13, wherein the control unit is arranged to control the display unit to display at least one part of the contents, image, and brief information of a web page corresponding to the link on the generated widget.

15. The display apparatus according to one of claim 10 to claim 14, wherein the control unit is arranged to control the display unit to display the generated widget on a screen separately from a web page display area.
